**Europäisches Patentamt**

**European Patent Office**

**Office européen des brevets**

(19)

(11) Veröffentlichungsnummer: **0 047 974**

**A2**

(12) # EUROPÄISCHE PATENTANMELDUNG

(21) Anmeldenummer: **81107077.0**

(22) Anmeldetag: **09.09.81**

(51) Int. Cl.$^3$: **B 23 B 39/16**

(30) Priorität: **17.09.80 DE 3035011**

(43) Veröffentlichungstag der Anmeldung:
**24.03.82 Patentblatt 82/12**

(84) Benannte Vertragsstaaten:
**BE CH DE FR GB IT LI SE**

(71) Anmelder: **M.A.N. MASCHINENFABRIK
AUGSBURG-NÜRNBERG Aktiengesellschaft
Bahnhofstrasse 66
D-4200 Oberhausen 11(DE)**

(72) Erfinder: **Nielbock, Hans
Böckenhoffstrasse 4
D-4250 Bottrop(DE)**

(54) **Vorrichtung zur Herstellung zweier achsparalleler Bohrungen.**

(57) Vorrichtung zur Herstellung zweier achsparalleler Bohrungen, mit zwei durch ein Zahnradgetriebe miteinander im Eingriff stehenden, gegenläufig synchron antreibbarren Bohrspindeln, wobei an jeder Bohrspindel ein Werkzeughalter angeordnet ist, wobei zur Herstellung sich teilweise überschneidender Bohrungen, insbesondere für eine Schraubenverdichtergehäuse die Werkzeughalter (3, 4) im wesentlichen als radiale Arme (34, 34'; 35, 35') ausgebildet und in einer solchen Winkelstellung an den Spindeln (1, 2) befestigt sind, daß ihre Achsen (X–X; Y–Y) annähernd senkrecht aufeinander stehen, wenn die verlängerte Achse (X–X; Y–Y) eines Armes (34, 34'; 35, 35') die Rotationsachse ($R_1$; $R_2$) einer Spindel (1, 2) schneidet, wobei die radiale Länge des Armes (34, 34'; 35, 35') und der Durchmesser der Spindel (1, 2) so bemessen sind, daß sich zwischen Arm und Spindel ein ausreichender Abstand ergibt.

./...

Fig. 2

0047974

2

Die Erfindung betrifft eine Vorrichtung zur Herstellung zweier achsparalleler Bohrungen mit zwei durch ein Zahnradgetriebe miteinander im Eingriff stehenden, gegenläufig synchron antreibbaren Bohrspindeln, wobei an jeder Bohrspindel ein Werkzeughalter angeordnet ist.

Derartige Bohrwerke sind aber zur Herstellung sich überschneidender Bohrungen, wie sie in Schraubenverdichtergehäusen vorliegen, nicht verwendbar. Solche sich überschneidenden Bohrungen müssen mit äußerster Präzision ausgeführt sein, da bei Schraubenverdichtern mit Gewindegängen ausgestattete Rotationskolben mit minimalem Spiel und gegebenenfalls berührungslos ineinandergreifen.

Beim Stand der Technik ist es üblich, die beiden Gehäusebohrungen nacheinander mit Hilfe eines einspindeligen Bohrwerkes auszuführen, gegebenenfalls bei unterschiedlichem Durchmesser der sich überschneidenden Bohrungen mit unterschiedlichen, als Bohrköpfe bezeichneten Werkzeughaltern.

Dabei ergibt sich der Nachteil, daß die Durchdringungskanten der sich überschneidenden Bohrungen ein Verlaufen der Bohrungsachse insbesondere bei der zweiten Bohrung verursachen, weshalb soche schwierigen Arbeiten bisher nur von besonders geschulten, zuverlässigen Fachkräften ausgeführt werden konnten. Darüber hinaus ist diese Arbeit sehr zeitaufwendig.

Die Aufgabe der Erfindung besteht darin, ein Vorrichtung zur Verfügung zu stellen, welche eine gleichzeitige und gleichlaufende Herstellung zweier sich teilweise überschneidender, gegebenenfalls unterschiedlicher Durchmesser aufweisender Bohrungen mit der für ein Schraubenverdichtergehäuse notwendigen Präzision ermöglicht, wobei eine exaktere Führung und dadurch eine schnellere und dabei fehlerfreie Bearbeitung des Werkstückes angestrebt wird. Vorzugsweise soll die neue Vorrichtung unkompliziert sein, ein übersichtliches und sicheres Arbeiten ermöglichen, und an die fachliche Qualifikation der Bedienungsperson keine hohen Ansprüche stellen.

Die Aufgabe wird dadurch gelöst, daß die Werkzeughalter im wesentlichen als radiale Arme ausgebildet und in einer solchen Winkelstellung an den Spindeln befestigt sind, daß ihre Achsen annähernd senkrecht aufeinander stehen, wenn die verlängerte Achse eines Armes die Rotationsachse einer Spindel schneidet, wobei die radiale Länge des Armes und der Durchmesser der Spindel im Bereich des Armes so bemessen sind, daß sich zwischen Arm und Spindel in dieser Stellung ein Abstand ergibt.

Mit der Vorrichtung nach der Erfindung ergibt sich der Vorteil, daß gleichzeitig und gleichlaufend zwei sich überschneidende Bohrungen gefertigt werden können, ohne daß sich die Werkzeughalter oder die von ihnen gehaltenen Werkzeuge gegenseitig behindern.

Dies wird durch das Zusammenwirken des entgegengesetzt synchronen Laufes der beiden Spindeln, der erfindungsgemäßen Ausgestaltung der Werkzeughalter sowie deren Winkelstellung erreicht. Hierdurch wird es möglich gemacht, die beiden Spindeln in einer Bohreinheit zusammenzufassen, woraus sich wesentliche Vorteile für eine exakte Einhaltung der geforderten Toleranzen ergeben, ebenso wie für die Überwindung des schädlichen Einflusses der Durchdringungskanten beider Bohrungen.

Eine Ausgestaltung der Erfindung sieht vor, daß ein Werkzeughalter mit zwei symmetrisch angeordneten Armen ausgestattet ist, die in einer Schnittebene senkrecht zur Bohrspindelachse eine rhomboedrische bis flachelliptische Form, gegebenenfalls mit abgestumpften Enden, aufweisen.

Durch diese Ausgestaltung wird den Werkzeughaltern ein Höchstmaß an Festigkeit und Eigensteifigkeit verliehen, was der sicheren und exakten Führung der Werkzeuge zugute kommt, ohne sich jedoch im Arbeitsbereich zu behindern.

Eine Ausgestaltung der Erfindung sieht weiter vir, daß eine Bohrspindel im Bereich des Werkzeughalters eine Verringerung des Durchmesser aufweist.

Diese Ausgestaltung ermöglicht in vorteilhafter Weise eine besonders stabile und dadurch starre Ausführung einer Bohrspindel im Bereich relativ hoher seitlicher Momente zwischen Lagerung und Werkzeughalter, während der funktionell unumgängliche geringere Durchmesser der Spindel nur im Bereich relativ geringerer seitlicher Momente im unmittelbaren Bereich des Werkzeughalters vorgesehen ist.

Weiter sieht eine Ausgestaltung der Erfindung vor, daß ein Werkzeughalter mit Schneidwerkzeugen für eine gleichzeitigen Bearbeitung von Seitenwand und Grund der Bohrung ausgestattet ist.

Hierdurch wird in vorteilhafter Weise erreicht, daß die Fertigung der Bohrung in einem Arbeitsgang erfolgen kann, wodurch bei erhöhter Präzision gleichzeitig auch eine schnellere Bearbeitung des Werkstückes ermöglicht wird.

Eine zweckmäßige Ausgestaltung der erfindungsgemäßen Vorrichtung sieht dabei weiter vor, daß eine Bohrspindel als Triebspindel antreibbar angeordnet ist, welche die andere Bohrspindel mit Hilfe eines beiden Spindeln zugeordneten Zahnradpaares antreibt.

Hierdurch ergibt sich der Vorteil einer kompakten, unkomplizierten Bauweise.

Und schließlich sieht eine weitere zweckmäßige Ausgestaltung der Vorrichtung nach der Erfindung vor, daß die Werkzeughalter an den Stirnseiten mit Führungselementen für Führungsbohrungen ausgestattet sind.

Hierdurch wird vorteilhaft ein äußerst präzises Arbeiten der Vorrichtung sichergestellt und zugleich die Leistungsfähigkeit der Bohrvorrichtung gesteigert.

Im folgenden wird die Erfindung anhand eines Ausführungsbeispieles in der Zeichnung dargestellt und dabei näher erläutert. Es zeigen

Fig. 1   eine Vorrichtung nach der Erfindung im Schnitt, wobei die Schnittebene durch die Rotationsachsen der Bohrspindeln gelegt ist,

Fig. 2   die gleiche Vorrichtung, ebenfalls im Schnitt entlang der Schnittebene III---III nach Fig. 1.

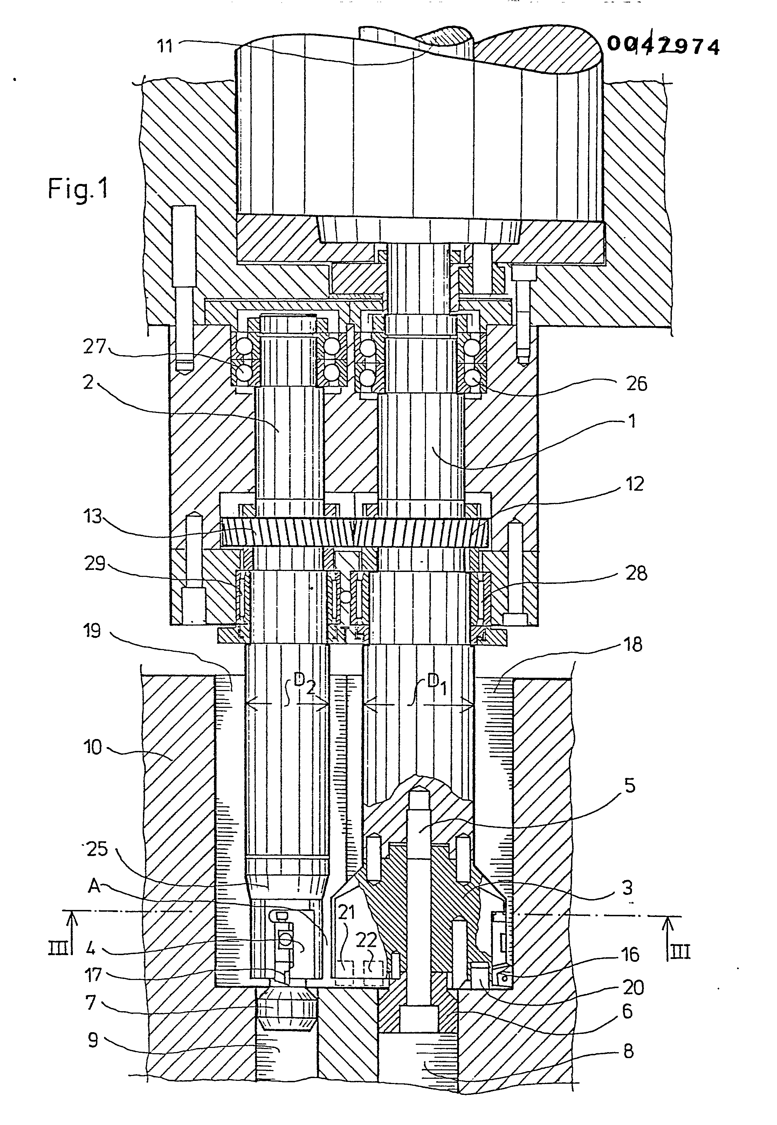

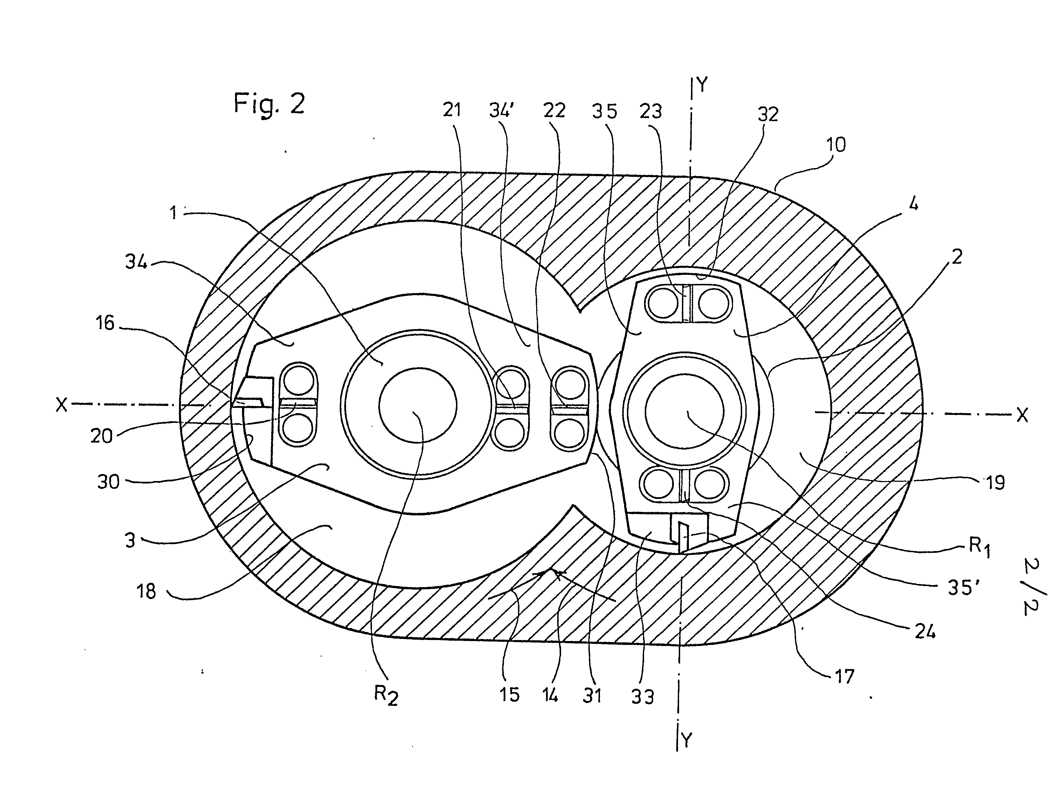

die Bohrvorrichtung gemäß Fig. 1 weist die Bohrspindel 1 und 2 auf, an deren arbeitsseitigen Enden die Werkzeughalter 3 und 4 mit Hilfe von Bolzen 5 befestigt sind. Die Bolzen 5 dienen gleichzeitig der Befestigung von Führungselementen 6 und 7, welche eine Zentrierung der Werkzeughalter 3 und 4 in Führungsbohrungen des Werkstückes 10 gewährleisten. Die Spindel 1 ist als Triebspindel in eine Arbeitsspindel 11 eines nicht dargestellten Bohrwerks eingespannt und wird von dieser angetrieben. Durch ein an der Spindel 1 befestigtes Zahnrad 12, welches sich mit dem Zahnrad 13 der Spindel 2 im Eingriff befindet, wird diese in einem gegenläufigen Sinn von der Spindel 1 ebenfalls angetrieben. Beie Zahnräder 12 und 13 haben die gleiche Zähnezahl, Durchmesser und Module, wodurch ein Übersetzungsverhältnis 1 : 1 eingehalten wird. Die ebenfalls verdrehungssicher mit den Spindeln 1 und 2 verbundenen Werkzeughalter 3 und 4 sind dabei in einer solchen Winkelstellung zueinander angeordnet, daß, wie aus Fig. 1 und 2 deutlich zu erkennen,
deren Achsen X -- X: Y -- Y senkrecht aufeinander stehen,
wenn entweder Achse X -- X die Rotationsachse R1 schneidet oder wenn die Achse Y -- Y die Rotationsachse R2
schneidet, wobei die entsprechenden Drehrichtungen der
Spindeln 1 und 2 durch die Pfeile 14 und 15 angegeben
sind. Die Werkzeughalter 3, 4 sind zur Bearbeitung der
Seitenwände der Bohrungen 18 und 19 mit den Schneidwerkzeugen 16 und 17, und zur Bearbeitung des Bohrungsgrundes mit den Schneidwerkzeugen 20 bis 24 ausgestattet. Im
Bereich der Werkzeughalter 3, 4 weist die Spindel 2 eine
Querschnittsverjüngung 25 auf, während von den äußerst
robusten Lagerungen 26 bis 29 bis hin zu den Werkzeugträgern 3, 4 die beiden Spindeln 1, 2 mit relativ
großen Durchmessern sehr massiv ausgeführt sind. Die
Durchmesserverjüngung 25 ist erforderlich, um in der
gezeigten Stellung der Werkzeughalter 3, 4 in Fig. 1
einen Abstand "A" zwischen dem Werkzeughalter 3 und der
Spindel 2 zu ermöglichen, ohne daß diese sich gegenseitig behindern.

Die erfindungsgemäß rhomboedrische bis flachelliptische
Formgestaltung der Amre 34, 34'; 35, 35' der Werkzeughalter 3, 4 geht deutlich aus der Fig. 2 hervor. Diese
Formgestaltung ist erfindungswesentlich, weil durch diese
einerseits das ineinandergreifende Arbeiten der Arme 34,
34'; 35, 35' ermöglicht, und andererseits ein Höchstmaß
an Stabilität erreicht wird. An den abgestumpften Enden
30 bis 33 sind jeweils die Schneidwerkzeuge 16, 17 und
22, 23 angeordnet.

Patentansprüche

1. Vorrichtung zur Herstellung zweier achsparalleler Bohrungen mit zwei durch ein Zahnradgetriebe miteinander im Eingriff stehenden, gegenläufig synchron antreibbaren Bohrspindeln, wobei an jeder Bohrspindel ein Werkzeughalter angeordnet ist, dadurch gekennzeichnet, daß zur Herstellung sich teilweise überschneidender Bohrungen, insbesondere für ein Schraubenverdichtergehäuse die Werkzeughalter (3, 4) im wesentlichen als radiale Arme (34, 34'; 35, 35') ausgebildet und in einer solchen Winkelstellung an den Spindeln (1, 2) befestigt sind, daß ihre Achsen (X--X; Y--Y) annähernd senkrecht aufeinander stehen, wenn die verlängerte Achse (X--X; Y--Y) eines Armes (34, 34'; 35, 35') die Rotationsachse (R1; R2) einer Spindel (1, 2) schneidet, wobei die radiale Länge des Armes (34, 34'; 35, 35') und der Durchmesser (D1, D2) der Spindel 1, 2) so bemessen sind, daß sich zwischen Arm und Spindel ein Abstand "A" ergibt.

2. Vorrichtung nach Anspruch 1, dadurch gekennzeichnet, daß ein Werkzeughalter (3, 4) mit zwei symmetrisch angeordneten Armen (34, 34'; 35, 35') ausgestattet ist, die in einer Schnittebene (III-III) senkrecht zur Bohrspindelachse (R1, R2) eine rhomboedrische bis flachelliptische Form, gegebenenfalls mit abgestumpften Enden (30 bis 33) aufweisen.

3. Vorrichtung nach einem der Ansprüche 1 oder 2, dadurch gekennzeichnet, daß eine Bohrspindel (2) im Bereich des Werkzeughalters (3, 4) eine Verringerung (25) des Durchmessers (D2) aufweist.

4. Vorrichtung nach einem der Ansprüche 1 bis 3, dadurch gekennzeichnet, daß ein Werkzeughalter (3, 4)

2

mit Schneidwerkzeugen (16, 17; 20 bis 24) für eine gleichzeitige Bearbeitung von Seitenwand und Grund einer Bohrung (18, 19) ausgestattet ist.

5. Vorrichtung nach einem der Ansprüche 1 bis 4, dadurch gekennzeichnet, daß eine Bohrspindel (1, 2) als Triebspindel antreibbar angeordnet ist, welche die andere Bohrspindel (2) mit Hilfe eines beiden Spindeln (1, 2) zugeordneten Zahnradpaares (12, 13) antreibt.

6. Vorrichtung nach einem der Ansprüche 1 bis 5, dadurch gekennzeichnet, daß die Werkzeughalter (3, 4) an den Stirnseiten mit Führungselementen (6, 7) für Führungsbohrungen (8, 9) ausgestattet sind.

Fig.1

Fig. 2

0047974